# EUROPEAN PATENT APPLICATION

(11) **EP 3 943 690 A1**
(43) Date of publication of application: **26.01.2022**
(21) Application number: 20186705.8
(22) Date of filing: 20.07.2020
(51) Int. Cl.: E04H 12/22, A47G 33/12

(54) **WOODEN BASE ELEMENT AND BASE STRUCTURE**

(71) Applicant: EcoTelligent Oy, 80400 Ylämylly (FI)
(72) Inventor: Pölönen, Matti, 80400 YLÄMYLLY (FI); Bálint, Gábor, 80400 YLÄMYLLY (FI); Fodor, Albert, 80400 YLÄMYLLY (FI); Németh, Botond, 80400 YLÄMYLLY (FI); Mátray, Gyöngyi, 80400 YLÄMYLLY (FI)
(74) Representative: Kolster Oy Ab

(57) **Abstract**

A wooden base element, comprising a wooden body part having at least a top surface, a bottom surface, two side surfaces and two end surfaces, wherein the wooden body part comprises one or more first coupling members and one or more second coupling members, wherein the one or more first coupling members are configured to be coupled with the one or more second coupling members. The wooden base element is used to form a base for supporting a structure like a pole, for example.

## Description

### TECHNICAL FIELD

The present invention relates to base structures, especially the base structures made of wood.

### TECHNICAL BACKGROUND

The bases are widely used, for example, for holding poles in an upright position. Many kind of equipment like, for example, telecommunication equipment may be mounted on the poles and may set high strength requirements for the pole and its base. In addition to the strength requirement, ecological requirements are also becoming more important nowadays. This combination may be challenging and therefore, a further sophisticated solution for the base structure is clearly desirable.

### BRIEF DESCRIPTION

The present invention is defined by the subject matter of the independent claims.

Embodiments are defined in the dependent claims.

The embodiments and features, if any, described in this specification that do not fall under the scope of the independent claim are to be interpreted as examples useful for understanding various embodiments of the invention.

### LIST OF DRAWINGS

Some example embodiments will now be described with reference to the accompanying drawings, in which
FIG. 1 and 2 illustrate a base element according to an embodiment of the invention;
FIG. 3 illustrates a coupling of two base elements according to an embodiment of the invention;
FIG. 4 illustrates a base made of three base elements according to an embodiment of the invention;
FIG. 5 and 8 illustrate the base made of four base elements according to embodiments of the invention;
FIG. 6 illustrates a base plate according to an embodiment of the invention; and
FIG. 7 illustrates a mounting member according to an embodiment of the invention.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Ecological requirements are or are becoming more important in many technical fields. This is the case also with base structures used, for example, for supporting the poles in an upright position. A lot of forces may be applied to the pole because of the heavy or large equipment mounted on the pole. The equipment mounted on the pole may be electronic devices, telecommunication devices, different kind of signs, light sources, solar panels and wind turbines for example. The mounting poles may be relatively high and may also often be in high places like, for example, on a roof of buildings especially when used with the telecommunication devices, and hence, the pole and the equipment mounted therein are exposed for a wind load. The forces applied to the pole set the tight strength requirements for the pole and its base structure. This causes many challenges for using the ecological materials in the base structures. In addition, the structure of the base should be modular such that it can be modified for different kind of supporting purposes.

The term "ground" in this application may refer, for example, to a roof of buildings, a soil surface or any other place to which the base can be set to hold a structure to be supported in a desired position.

According to an aspect, there is provided a wooden base element. In an embodiment, the base element comprises a wooden body part having at least a top surface, a bottom surface, two side surfaces and two end surfaces, wherein the wooden body part comprises one or more first coupling members and one or more second coupling members, wherein the one or more first coupling members are configured to be coupled with the one or more second coupling members.

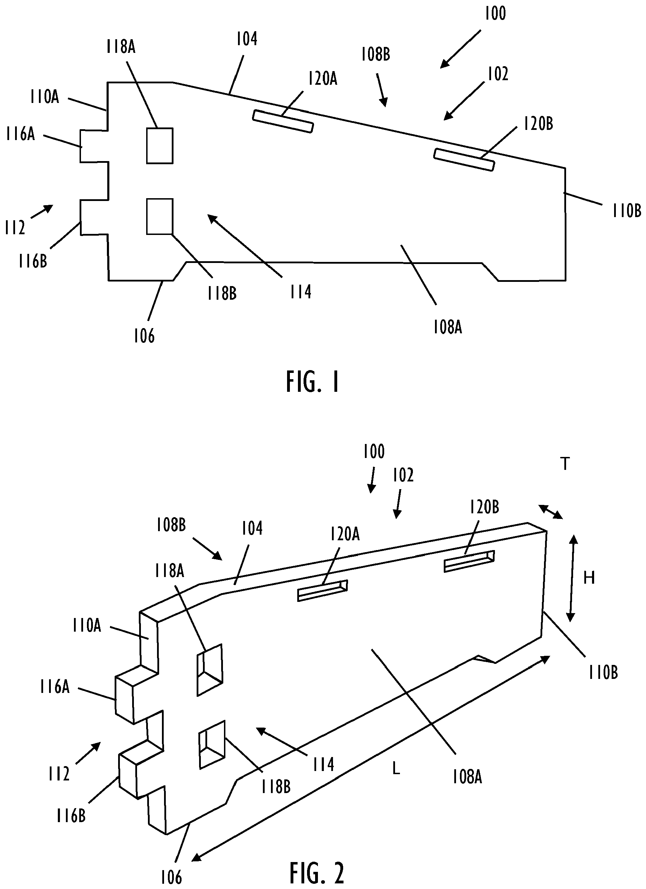

Referring to Figure 1 wherein the wooden base element (called also a base element later in this application) is illustrated according to an embodiment. The base element 100 comprises the wooden body part 102 having the top surface 104, bottom surface 106, two side surfaces 108A, 108B, and two end surfaces 110A, 110B. None of the mentioned surfaces may necessarily be straight and uniform. Each of the mentioned surfaces may comprise a plurality of surfaces and shapes. For example, the top surface may comprise a horizontal portion and a downwards extending portion, the bottom surface may comprise an opening in the middle such that the middle portion of the bottom surface is in the different plane compared to side portions of the bottom surface as illustrated in Figure 1. Still each side of the body part is called as a surface in this application nevertheless the surface is not necessarily uniform and even and may comprise a plurality of surfaces.

In an embodiment, body part has a plate kind of structure. The plate kind of structure refers to a shape in which the area of the side surface(s) is substantially larger compared to the end, top and/or bottom surfaces. A size (area) of the two side surfaces or the two end surfaces is not necessarily same. For example, the size of a first side surface may be different from the size of a second side surface. Respectively a size of a first end surface may differ from a size of a second end surface.

Referring to Figure 2, a distance between the side surfaces refers to a thickness of the body part T, a distance between the end surfaces refers to a length of the body part L and a distance between the top and bottom surfaces refers to a height of the body part H. In an embodiment, the thickness T, length L and/or height H of the body part may vary in different places of the part. For example, the thickness may be larger in vicinity of a first end surface than in vicinity of a second end surface. In other words, the thickness of the body part may reduce from the first end surface to the second end surface or from the bottom surface to the top surface or the other way around.

The dimensions and a shape of the base element may vary according to the needs. For example, a structure to be supported by the base may affect the dimensions of the base element. In other words, a load to be supported by the base may affect the dimensions. In one embodiment, the length L of the base element is 1300 - 1800mm, the height H 450 - 650mm and the thickness T 70 - 90mm.

In an embodiment, the material of the wooden base element comprises the wood. For example, a material of the body part may comprise a processed wood like a cross-laminated timber (CLT). The body part may also comprise components made of the other material than the wood, The components may be made of steel, for example.

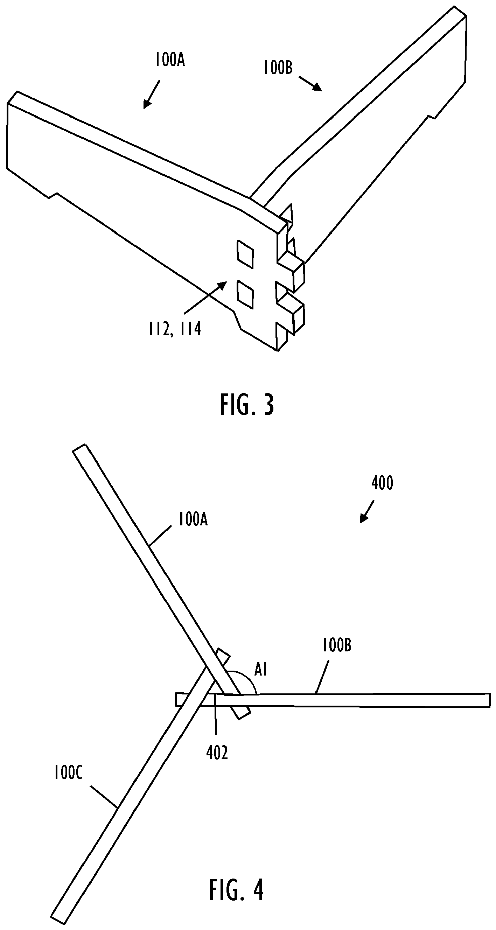

Referring to Figure 1, in an embodiment, the base elements comprises the one or more first coupling members 112 and the one or more second coupling members 114 wherein the first and the second coupling members are configured to be coupled together. The coupling members may be used for coupling two (or more) body parts of the base elements together such that the first coupling member of a base element is coupled with the second coupling member of a base element. Figure 3 illustrates an embodiment in which the base elements 100A, 100B are coupled together by the coupling members 112, 114 according to an embodiment.

The first and second coupling members may be coupled together with or without tools. The first and the second coupling members may be configured to be removable coupled together such that connection formed by the coupling members can be opened with or without tools. In an embodiment, the first and/or second coupling member may comprise a plurality of components needed for coupling the members together.

In an embodiment, the first coupling member is a protrusion and the second coupling member is a hole configured to receive the protrusion. Referring to Figures 1 and 2, the first coupling member 112 is the protrusion extending from one surface of the body part 102. The protrusion may extend perpendicularly from the surface where it is. The protrusion may also extend in a certain angle in relation to the surface. The second coupling member 114 may be the hole configured to receive the first coupling member 112 wherein the second coupling member may be placed on a different surface than the first coupling member. The hole may extend perpendicularly inside the body part from the surface where it is. The hole may also extend in a certain angle in relation to the surface.

The hole is dimensioned such that the protrusion may enter into the hole. The hole may be through hole or it may be a cavity which does not go thought the body part. A length and diameter of the protrusion is adjusted such that it fits inside the hole. The protrusion and hole may be adjusted together such that there is some clearance between them for facilitating the coupling of two or more body parts together. In case of the through hole, the protrusion may also extend through the hole such that end of the protrusion comes out of the hole from other side of the body part. In an embodiment, the part of the protrusion that comes out of the hole (on the opposite side) may be used to lock two or more body parts together.

In an embodiment, the fist coupling member is a threaded bar like, for example, a bolt and the second coupling member is a counterpart for the threaded bar like, for example, a nut or thread insert.

In an embodiment, the first and/or second coupling members is/are hole(s) configured to receive the bolt and or nut/thread insert. Then the first and or second coupling member may comprise the separate components like bolt(s) and nut(s), for example. The hole may be on the side and end surface of the body part such that the bolt comes out/in from the end surface. The hole may start from the side surface and extend through the end surface enabling to assemble the bolt such that it comes out of the end surface. Respectively the hole may enable also assembling of the nut to the bolt which is comes in from the hole of the end surface.

In an embodiment, the first and the second coupling members are placed on the same surface.

In an embodiment, a shape of the protrusion (cross section) is substantially a rectangle. A shape of the hole may be same like the shape of the protrusion. The shape of the protrusion and/or hole may also be, for example, round or square or any other suitable shape.

In an embodiment, the protrusion and/or the hole may be tapered. For example, the protrusion may taper towards its end and the hole may be formed respectively such that it is capable to receive the tapered protrusion. Dimensions of the protrusion and the hole may vary according to the needs.

In an embodiment, the one or more first coupling members are placed on the end surface of the body part. Referring to Figures 1 and 2, which illustrate an embodiment in which the first coupling member 112 is placed on the end surface 110A, 110B. The first coupling member may the protrusion on the end surface 110A, 110B and it may extend in a direction that is parallel to a longitudinal axis L of the body part. The longitudinal axis is parallel to the length of the body part L. A thickness of the protrusion may be same as the thickness of the body part T in vicinity of the end surface in which the protrusion is.

In an embodiment, both of the end surfaces comprise the first coupling member.

In an embodiment, the one or more second coupling members are placed on the side surface of the body part. Still referring to Figure 1 and 2, the second coupling member may be placed on the side surface 108A, 108B in vicinity of the end surface in which the first coupling member is. The second coupling member may be placed on one side surface or on the both side surfaces. For example, if the second coupling member is the hole extending through the body part, the second coupling member may be on the both sides of the side surfaces. If the second coupling member is the cavity which does not extend through the body, the second coupling member may be placed on one side surface or the both side surfaces of the body part. The hole (its centre line) may parallel to the thickness of the body part T, in other words, perpendicular to the longitudinal axis (direction L) and/or side surfaces.

Still referring to Figure 1, in an embodiment the first coupling member comprises two coupling members 116A, 116B and the second coupling member comprises two coupling members 118A, 118B. Both of the first coupling members 116A, 116B may have substantially the same structure and/or shape. Also both of the second coupling members 118A, 118B may have the same structure and/or shape. In an embodiment, the structure and/or shape of the first coupling members 116A, 116B may be different. Also the structure and/or shape of the second coupling members 118A, 118B may be different.

Referring to Figure 1, in an embodiment, when coupling two body parts together, an upper first coupling member 116A is configured to be coupled with an upper second coupling member 118A and a lower first coupling member 116B is configured to be coupled with a lower second coupling member 118B. In other words, the upper second coupling member 118A may be a counter part for the upper first coupling member 116A or the other way around. Respectively, the lower second coupling member 118B may be a counter part for the lower first coupling member 116B or the other way around.

In an embodiment, the first and/or second coupling member may comprise three or more coupling members.

In an embodiment, the bottom surface of the body part is substantially towards the ground when the modular wooden base element is in use. Referring to Figure 1, the base element 100 is configured to placed upright position in use such that the bottom surface 106 is facing down and the top surface 104 is facing up. Facing down means that the surface is towards the ground on which the base element is placed. In use refers to the situation in which the base elements are used to form a base for supporting structures.

Referring to Figures 1 and 2, in an embodiment the body part further comprises at least one grip member 120A, 120B. The purpose of the grip member is to enable easier moving of the base element. The body part may comprise, for example, two grip members placed on the side surfaces in vicinity of the top surface. The grip member may be a cavity and/or a through hole in the body part. If the grip member is the cavity (not through the part), the body part may have similar cavities on the both side surfaces such that the location of the cavities is substantially the same but other one is on the opposite side surface of the part. The cavity and/or though hole may be placed such that when taking a grip from the top of the body part, fingers fit into the cavity/hole enabling a firm grip. A shape and dimensions of the cavity and/or hole may vary according to the needs.

In an embodiment, the grip member is a handle. The handle may be placed on the top, end or side surfaces of the body part, for example. The handle may be a separate component fastened by fastening means like, for example, screws.

In an embodiment, the body part further comprises one or more holes configured to be used, for example, for connecting components to the base element. The components may refer to lifting/moving equipment, a stay wire or any other component needed for moving or mounting the base element(s), poles coupled with the base or equipment mounted in the pole, for example.

In an embodiment, the body part further comprises components like bolts, threaded rods, nuts and/or thread inserts used for coupling other components to the base element and/or the base elements together, for example.

According to another aspect, there is provided a base made of the wooden base elements. In an embodiment, the base comprises three or more wooden base elements according to claim 1. Referring to Figure 4 wherein the base 400 made of the three base elements 100A, 100B, 100C is illustrated from a top view according to an embodiment. The three base elements are coupled together by the coupling members as described above such that the base elements support each other and form the base. The bottom surfaces of the base elements may be set to be towards the ground on which the base is placed. In other words, an axis parallel to the height H of the body part may be substantially perpendicular to the ground.

In an embodiment, the first coupling member may comprise the protrusion on the other end surface extending along the longitudinal axis of the body part and the hole on the side surface(s) configured to receive the protrusion. Still referring to Figure 4, the hole may be adjusted to be in angle in relation to the side surface such that the angle A1 between the side surfaces of the coupled base elements is about 120 degrees. In an embodiment, there is some clearance between the protrusion and the hole for facilitating the coupling of the coupling members of the body parts together. The clearance allows moving of the protrusion in the hole in several directions.

For example, when three base elements are used to form the base, a first coupling member of a first base element 100A is coupled with a second coupling member of a second base element 100B, a first coupling member of the second base element 100B is coupled with a second coupling member of a third base element 100C and a first coupling member of the third base element 100C is coupled with a second coupling member of the first base element. The angle between the side surfaces of the base elements that are side-by-side is then about 120 degrees as illustrated in Figure 4.

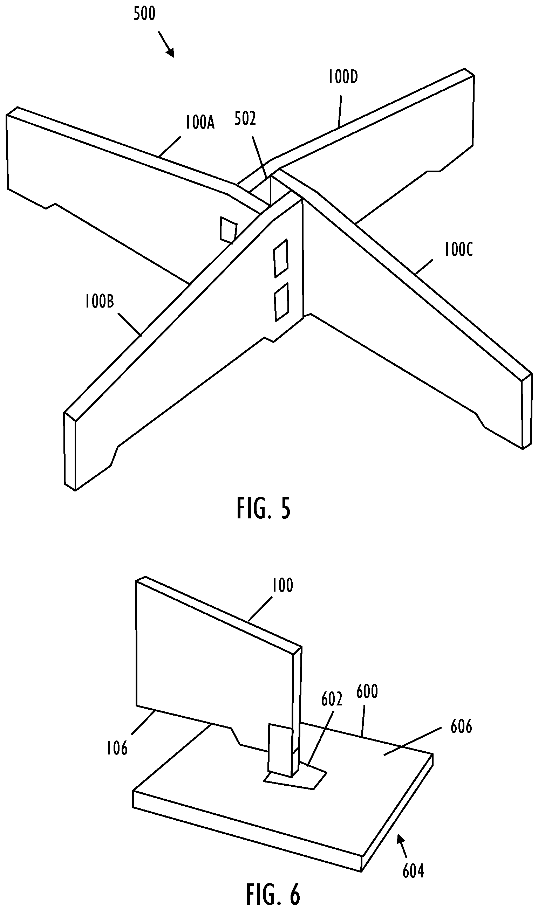

In an embodiment, the base comprises four base elements according to claim 1. Figure 5 illustrates the base 500 made of the four base elements 100A, 100B, 100C, 100D from an isometric view. The four base elements are coupled together by the coupling members of the body parts such that the base elements support each other and form the base. The bottom surfaces of the base elements may be set to be towards the ground on which the base is placed. In other words, the axis parallel to the height H of the body part may be substantially perpendicular to the ground.

In an embodiment, the first coupling member comprises the protrusion on the other end surface extending along the longitudinal axis of the body part and the hole on the side surface(s) configured to receive the protrusion. When the four base elements are used to form the base, the hole may be adjusted to be parallel to the direction of the thickness T as illustrated in Figure 2. Then the body part (its longitudinal axis) is substantially in 90 degrees angle in relation to the other body part (to its longitudinal axis) it is coupled with (for example base elements 100A and 100B) as illustrated in Figure 5.

For example, when the four base elements are used to form the base, a first coupling member of a first base element 100A is coupled with a second coupling member of a second base element 100B, a first coupling member of the second base element 100B is coupled with a second coupling member of a third base element 100C, a first coupling member of the third base element 100C is coupled with a second coupling member of a fourth base element 100D and a first coupling member of the fourth base element 100D is coupled with a second coupling member of the first base element 100A.

In an embodiment, one or more mechanical fastening members is used in addition to the protrusion and hole. The mechanical fastening member may comprise one or more screws, bolts, nuts, threaded bars, thread inserts and/or any other known mechanical fastening means, for example. The mechanical fastening member(s) may be used to ensure the connection of the protrusion and hole, for example.

In an embodiment, one or more chemical fastening members is in addition to the protrusion and hole. The chemical fastening member may comprise a glue, for example.

In an embodiment, the base structure comprises a slot substantially in the middle of the base structure formed by the base elements configured to receive a structure to be supported by the base. Referring to Figure 4, when the base is formed from the three base elements 100A, 100B, 100C, the coupled elements form the slot 402 in the middle of the base 400. A shape of the slot is triangle and it is configured to receive the structure to be supported by the base. Referring to Figure 5, when the base is formed from the four base elements 100A, 100B, 100C, 100D, the coupled elements form the slot 502 in the middle of the base 500. A shape of the slot is square and it is configured to receive the structure to be supported by the base. The structure in both cases may be a pole kind of structure, for example. A size of the slot depends on the location of the first and/or second coupling members in the body part. Hence, the size of the slot may be adjusted by adjusting the locations of the first and/or second coupling members in the body part.

In an embodiment, the base further comprises a base plate coupled with a base element. Each base element used in the base structure may comprise the base plate. Referring to Figure 6, the base element 100 may be coupled with the base plate 600. The base plate may have a plate kind of structure and its purpose is to further support the base structure and facilitate assembly of the base to the different kind of the grounds. The base plate may be placed on ground such that its another side surface (large surface) is towards the ground and another side surface is up. Hence, a first large side surface of the base plate is a bottom surface 604 and a second large side surface is a top surface 606. The base plate may be coupled with the base element in vicinity of the end surfaces of the base element. The end surface may be opposite to the end surface in which the first coupling member is placed.

Still referring to Figure 6, in an embodiment, the base plate may be coupled with the base element by a fastening member 602. The fastening member is configured to be adjustable such that a distance between the top surface of the base plate 604 and the bottom surface of the base element 106 can be changed. In addition, a distance from the centre of the base (from the slot) to the fastening member may be adjusted. The fastening member may be placed on the top surface of the base plate 604. The base element may comprise a plurality of the fastening holes in different spots of the body part for the fastening member. This enables adjustment of the location of the fastening member when fastening the base plate with the body part.

The fastening member may also comprises a swivel configured to allow turning of the base plate in relation to the base element. The adjustable fastening member allows adjustment of the base element to the different kind on assembly grounds. For example, when each of the base element of the base comprises the base plate and adjustable fastening member, the base can be easily set in balance when placed on an uneven ground.

In an embodiment, the fastening member is coupled with the base plate and/or base element by one or more screws, bolts and/or nuts.

The base plate may further comprise a grip member configured to facilitate moving of the base plate. The grip member may be the same like in the base element described above. A size of the base plate may vary according to the needs. The material of the base plate may be same like the material of the base element.

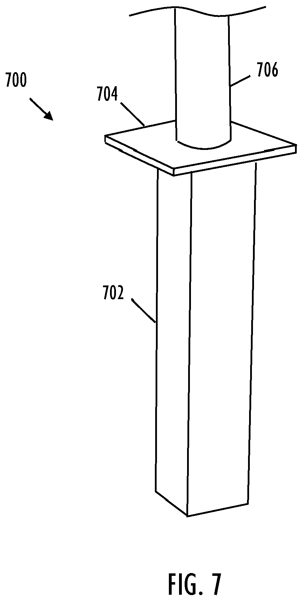

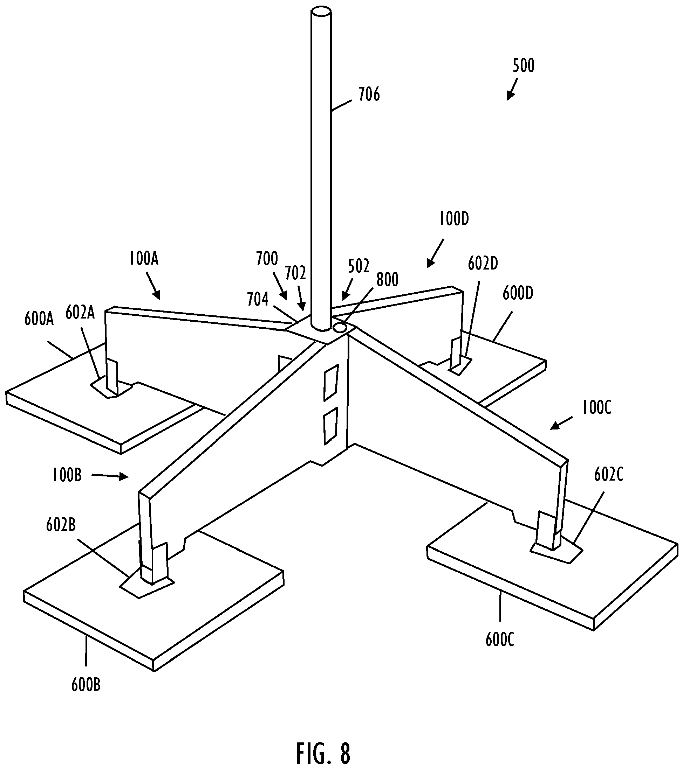

In an embodiment, the base further comprises a mounting member configured to be assembled within the slot. The mounting base maybe removable assembled with the base. Referring to Figure 7, the mounting member 700 is configured to receive the structure to be supported by the base, for example, the pole 706. The mounting member is placed into the slot of the base. The mounting member may comprise a frame portion 702 having the same shape (cross section) like the slot to which it is assembled, for example, square if the four base elements are used to form the base as illustrated in Figure 7. A structure of the frame portion may be hollow. The frame portion goes into the slot. The mounting member may further comprise a mounting tray 704 in another end of the frame portion 702. The mounting tray may be a plate-kind of structure. Referring to Figure 8, the mounting tray 704 may stay on the top of the base 500 and the frame portion 702 may go into the slot 502 when the mounting member 700 is assembled in the base 500. The mounting tray is configured to be coupled with the structure to be supported by the base. The mounting tray may further comprises fixing means for coupling the structure to be supported with the base. The fixing means may comprise, for example, a feature which is configured to be coupled with a counter feature wherein the counter feature may be placed in the structure to be supported and coupled with the mounting tray. The fixing means may also comprise one or more bolts, nuts, threaded bars and/or thread inserts. The fixing means or part of them may be integrated in the mounting tray. Some of the mounting means may be separate components. In an embodiment, a material of the mounting base comprises steel. In another embodiment, the material of the mounting base comprises wood. The mounting member may be coupled with the base by the fixing means described above. The mounting member may be coupled with the base from the frame portion and/or mounting tray.

In an embodiment, the base further comprises a pole. Referring to Figure 8, the pole 706 may be coupled with the base 500 with the mounting member 700 as described above. The base is used to hold the pole in the upright position and allowing installation of the equipment in the pole. Dimensions of the pole may vary according to the needs. In an embodiment, a material of the pole comprises steel. In another embodiment, the material of the pole comprises wood. The wooden pole may be, for example, a laminated wooden pole.

In an embodiment, the pole may be coupled directly to the base without the mounting member. In an embodiment, the pole comprises means for coupling the pole to the base.

In an embodiment, the pole is coupled with the base such that the pole can be overturned. The mounting tray may comprise a hinge allowing overturn of the pole. This may facilitate to mount the desired equipment in the pole.

In an embodiment, the pole comprises an eyelet in vicinity of the top of the pole for facilitating the overturn or lifting of the pole.

Still referring to Figure 8, in an embodiment, the base 500 further comprises a spirit level 800. The spirit level is configured to show a straightness of the base placed on the ground and/or pole coupled with the base. For example, the spirit level may be used to get the pole to be substantially perpendicular to the ground where the base is. For example, fastening member of the base plates may be adjusted based on the spirit level such that the pole is substantially perpendicular in relation to the ground. In an embodiment, the spirit level is placed on the mounting member. It may be placed, for example, on the mounting tray.

Figure 8 illustrates the base 500 made of the four base elements 100A - D according to an embodiment. The base elements 100A - D are coupled with the base plates 600A - D by the fastening members 602A - D. The base 500 comprises the pole 706 coupled with the base 500 by the mounting member 700 and the base further comprises sprit level 800.

The wooden base element and the base made of the base elements are ecological solutions for supporting the different kind of structures. Because the base element is made of the wood, it may be efficiently recycled. In addition, the base element may be made of recycled wood materials, for example.

The base is also scalable for different kind of purposes. For example, if the load in the pole is very large, the size of the base elements may be enlarged to get the more robust base structure for the heavy load. Respectively if the load is smaller, the size of the base elements may be smaller.

Even though the invention has been described with reference to one or more example embodiments according to the accompanying drawings, it is clear that the invention is not restricted thereto but can be modified in several ways within the scope of the appended claims. All words and expressions should be interpreted broadly, and they are intended to illustrate, not to restrict, the example embodiments. It will be obvious to a person skilled in the art that, as technology advances, the inventive concept can be implemented in various ways.

## Claims

1. A wooden base element, comprising:
a wooden body part having at least a top surface, a bottom surface, two side surfaces and two end surfaces,
wherein the wooden body part comprises one or more first coupling members and one or more second coupling members, wherein the one or more first coupling members are configured to be coupled with the one or more second coupling members.

2. The wooden base element of claim 1, wherein the one or more first coupling members comprise a protrusion and the one or more second coupling members comprise a hole configured to receive the protrusion.

3. The wooden base element of any preceding claim, wherein the one or more first coupling members are placed on the end surface of the body part.

4. The wooden base element of any preceding claim, wherein the one or more second coupling members are placed on the side surface of the body part.

5. The wooden base element of any preceding claim, wherein both the first and the second coupling member comprises two coupling members.

6. The wooden base element of any preceding claim, wherein the body part further comprises a grip member.

7. The wooden base element of any preceding claim, wherein the bottom surface is substantially towards ground when the wooden base element is in use.

8. A base structure, comprising three or more wooden base elements according to claim 1.

9. The base structure of claim 8, wherein the base structure comprises four wooden base elements according to claim 1.

10. The base structure of claims 8 - 9, wherein the base structure comprises a slot substantially in the middle of the base structure formed by the base elements.

11. The base structure of claim 10, wherein the base structure further comprises a mounting member configured to be assembled within the slot.

12. The base structure of claims 8 - 11, wherein the base structure further comprises a base plate coupled with the wooden base element.

13. The base structure of claim 12, wherein the base plate is coupled with the wooden base element by a fastening member.

14. The base structure of claims 8 - 13, wherein the base structure further comprises a pole.

15. The base structure of claims 8 - 14, wherein the base structure further comprises a spirit level.
